# EUROPEAN PATENT SPECIFICATION

(11) **EP 2 466 853 B1**
(45) Date of publication and mention of the grant of the patent: **08.10.2014**
(21) Application number: 10306448.1
(22) Date of filing: 17.12.2010
(51) Int. Cl.: H04L 29/08, H04L 29/06, H04W 4/20

(54) **Control of connection between devices for controlling the initiation, routing and security of connections between devices**
Steuerung der Verbindung von Vorrichtungen zur Steuerung des Aufbaus, der Wegelenkung und Sicherheit von Verbindungen zwischen Geräten
Commande de connexion entre des dispositifs pour le commande de l' initiation, le routage et la sécurité des connexions entre dispositifs

(43) Date of publication of application: 20.06.2012
(73) Proprietor: ALCATEL LUCENT, 92100 Boulogne-Billancourt (FR)
(72) Inventor: Marce, Olivier, 91620, NOZAY (FR); Maknavicius, Linas, 91620, NOZAY (FR)
(74) Representative: Mouney, Jérôme

(56) References cited:
- EP-A1- 2 202 939
- WO-A1-2008/147548
- US-A1- 2004 177 276
- US-A1- 2009 282 473
- US-B1- 6 463 474

## Description

### FIELD OF THE INVENTION

The present invention relates to a system for controlling the connection between devices in a telecommunication network, and more specifically for controlling the initiation, routing and security of connection between devices.

### BACKGROUND

There is a need to ease safe and efficient connections of devices of several people. A detailed example of that is, for two given people Alice and Bob, to allow Alice to let Bob to have access to one or several or her networked device. This must be done in a safe way, such that no one else can connect, and that both Alice and Bob trust the connection. The device can be, for example, a firewall, a laptop, a femtocell, etc.

The efficiency of the connection also relies on the control of the routing in the network (for example in Internet or any IP network). In addition, the connection must be made in an automatic way.

In the current existing solution, two users willing to communicate need to agree on the application to use which in turn implies the network configuration to set up on both side. For example, two users willing to communicate via a voice on the web application need that both users opens their ports on the networked device, usually a computer, they want to use to each other such that the voice on the web application instance on their computer can communicate, having an application listening on these ports as well as to have the firewall rules allowing the use of these ports. In the general case, having the ports open on the end device is not enough, as a firewall can be instantiated in other devices like the DSL or Wi-Fi box. In addition, if Alice wants to allow Bob to connect not only to her laptop to have a voice on the web application session, but also to her femtocell to let him to benefit of the femtocell when he's visiting her, she has to configure her femto separately.

A known solution relies on an initiative coming from either Alice or Bob, to connect to the other party. They need to share some information like domain name, IP address, public key, etc. as well as the communication application or protocol they want to use. They usually can use some repository that allows them to find information about the other party. For example Alice, connects to the repository, types in the name of Bob and she gets the information to connect to Bob's device, or the system automatically initiates the connection.

A further solution to regulate range of access to personal information of a mobile unit's owner is known from US2009/0282473 A1.

This approach does not allow making devices interconnecting together.

### SUMMARY

To remedy the problems referred to hereinabove, a method (claim 1) according to the invention for controlling connection between at least a user communicating device and a network entity through a telecommunication network, comprising the following steps in a controlling device linked to the network entity:
interrogating a social network system to retrieve profile data of the user of the communicating device, and
applying a policy to control the connection between the network entity and the user communicating device, the policy depending on the profile data including at least a social relationship between the user of the communicating device and the user owning the network entity.

The invention advantageously controls the initiation, routing and security of connection between devices thanks to social networking systems and trusted relationships between people inside them.

At a first glance, the social networking system is considered as a data base repository that stores mainly identities and relationship descriptions. Such information is used by social networking applications to present the information about the social network of users, and to allow them to interact each other.

In an embodiment, the controlling device interrogates the social network system after a communication attempt from the user communicating device with the network entity.

In an embodiment, the method further comprises the following steps:
receiving an identifier of the user communicating device transmitted by the latter attempting a communication with the network entity,
transmitting a request including an identifier of the user communicating device and an identifier of the user owning the network entity to the social network system which identifies profile data associated with the identifier of the user communicating device and to the identifier of the user and transmits a response including profile data to the controlling device.

In an embodiment, the profile data contains a presence status of the user of the communicating device and the policy applied to control the connection between the network entity and the user communicating device depends further on the presence status of the user of the communicating device.

In an embodiment, the profile data contains at least an identifier of a communication entity linked to the user communicating device and the device applies a policy to control communications between the network entity and said communication entity linked to the user communicating device.

In an embodiment, the network entity is an access control enforcement point, for example included in a wireless access point.

In an embodiment, the policy applied to control the connection between the network entity and the user communicating device is a set of instructions to allow or deny an access request from the user communicating device to the network entity.

A further object of the invention is a controlling device according to claim 8 for controlling connection between at least a user communicating device and a network entity linked to the controlling device through a telecommunication network, the device comprising:
means for interrogating a social network system to retrieve profile data of the user of the communicating device, and
means for applying a policy to control the connection between the network entity and the user communicating device, the policy depending on the profile data including at least a social relationship between the user of the communicating device and the user owning the network entity.

The invention relates further to a computer program according to claim 9 adapted to be executed in a controlling device for controlling connection between at least a user communicating device and a network entity linked to the device through a telecommunication network, said program including instructions which, when the program is executed in said controlling device, execute the steps of the method of the invention.

### BRIEF DESCRIPTION OF THE FIGURES

Some embodiments of the present invention are now described, by way of example only, and with reference to the accompanying drawings, in which:
- FIG. 1 is a schematic block-diagram of a controlling device linked to a social network system according to an embodiment of the invention,
- FIG. 2 is a flowchart showing steps performed to execute a method for controlling the connection between devices in a telecommunication network according to an embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

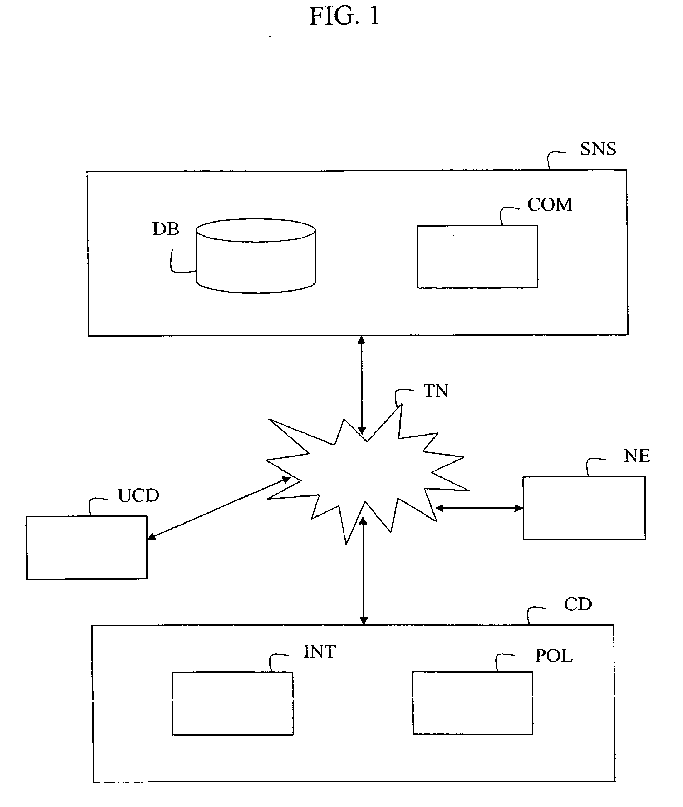

Referring to FIG. 1, a communication system comprises a controlling device CD which is able to communicate with a social network system SNS through a telecommunication network TN and is linked to a network entity NE able to communicate with at least a user communicating device UCD.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

The user communicating device UCD can be a mobile device or a fixed device.

As mobile device, the user communicating device UCD can be a radio communication mobile terminal. For example, the communicating device UCD is a mobile phone, or is a communicating Personal Digital Assistant PDA, or an intelligent telephone like SmartPhone.

In another example, the user communicating device UCD is connected to a base station of a public wireless network of limited scope, such as WLAN (Wireless Local Area Network) or conforming to a standard 802.11x, or medium range according to the protocol WiMAX (World Wide Interoperability Microwave Access)

In another example, the user communicating device UCD is a cellular mobile radio communication terminal, connected by a channel to a radio access network through a base station of any type, including but not restricted to, femto base station.

As fixed device, the user communicating device UCD can be a personal computer connected directly via a modem to link of type xDSL (Digital Subscriber Line) or ISDN (Integrated Services Digital Network Services) connected to the packet network PT.

In another example, the user communicating device UCD can be a television, a set-top box, or a game console connected to the telecommunication network, or can be a transport means like a car or bicycle connected to the telecommunication network.

The user communicating device UCD can be any device that is owned and handled by a user and that is able to communicate with the telecommunication network.

The social network system SNS can be a system comprising one or more servers delivering a social network service. The system SNS stores in a database DB a profile of each user registered to social network service and social relationships between users. The database contains optionally the presence status of the users, which can be regularly updated. The system SNS comprises further a communication module COM for communicating with the controlling device CD.

The controlling device CD is a network entity able to communicate with the social network system SNS and with a network entity NE. In some embodiments, the controlling device CD can be included within the network entity NE.

The controlling device CD comprises an interface INT and a policy module POL. The interface INT permits communication with the telecommunication network, especially with the social network system SNS and at least a user terminal UT. The policy module POL contains policy to apply to the communicating device of a user according to profile information relating to the user. It is also considered that the network entity NE is owned by a user and the policy module POL stores an identifier IdU of this user.

The network entity NE handles the packet traffic coming from and to the user communicating device. For example, the network entity NE is a modem, a femto or WLAN access point.

The controlling device CD can be considered as an access control enforcement point. For example, the controlling device CD is a firewall included in a computer or included in a modem both considered as network entity NE. In other examples, the controlling device CD is a module included in a femto or WLAN access point as network entity NE implementing functions of access authorization and filtering for communications with the access point.

A user may possess several user communicating devices UCD and a user communicating device may comprise several communication entities.

For example, a user may possess a mobile terminal and a computer equipped with an audio device like a microphone and with a video device like a camera.

The social network system SNS memorizes in the profile of each user the different user communicating device UCD the user has registered and the different communication entities each user communicating device may be equipped with.

For that, the database DB memorizes an identifier IdU of each user in correspondence with identifier IdD of every communicating device the user possess. Optionally, a communicating device identifier IdD is memorized in correspondence with one or many identifiers of communication entities linked to the communicating device, like a camera. Also in correspondence with each user, identified by identifier IdU, is memorized the social relationship with each other user registered and identified by another identifier IdU.

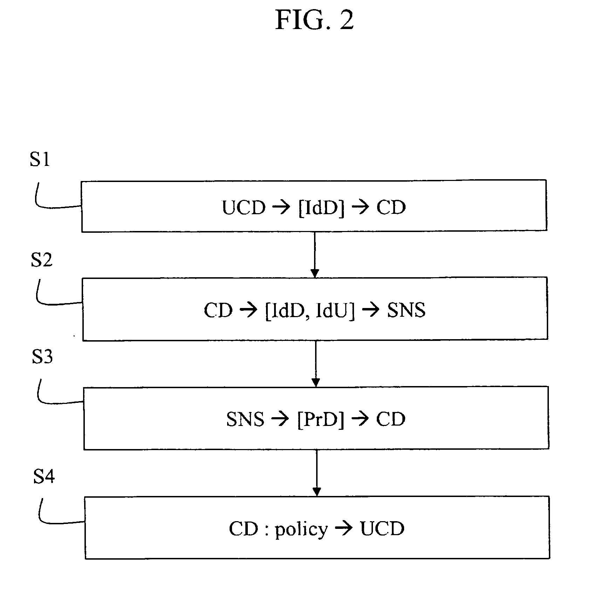

With reference to FIG. 2, a method for controlling a connection between devices according to one embodiment of the invention comprises steps S1 to S4 executed automatically within the communication system.

At step S1, the controlling device CD linked to the network entity NE detects a communication attempt from a user communicating device UCD with the network entity NE.

The user communicating device UCD transmits an identifier IdD of the communicating device UCD to the interface INT of the controlling device CD.

At step S2, the controlling device CD interrogates the social network system SNS in order to retrieve profile information of the user of the communicating device UCD.

Thus, the interface INT of the controlling device CD sends to the system SNS a request including the communicating device identifier IdD and an identifier IdU of the user owning the network entity NE.

At step S3, the system SNS identifies a profile containing profile data PrD associated with the identifier IdD and corresponding to the identifier IdU of the user owning the network entity NE.

The system SNS transmits a response including profile data PrD to the controlling device CD via the communication module COM, optionally with the identifier IdD to identify the response to the previous request.

At step S4, the policy module POL of the controlling device CD analyses the profile data PrD and identifies in a policy table a policy corresponding to the profile data PrD. The controlling device CD applies the identified policy to the network entity NE to control the connection between the network entity NE and the user communicating device UCD, the policy being for example a set of instructions to allow or deny an access request from the user communicating device UCD to the network entity NE.

The profile data PrD contain the social relationship between the user of the communicating device UCD and the user owning the network entity NE. The policy applied to the user communicating device depends at least on this social relationship. There can be different types of social relationships that may be put together into groups associated with specifics policies. For example, a same policy may be associated to social relationship of type "friend" and "family".

The profile data PrD may further contain a presence status of the user of the communicating device UCD. For example, the presence status represents the current activity of the user, like the following status: "online", "away", or "busy".

The profile data PrD may further contain identifiers of communication entities linked to the communicating device UCD, like a camera.

The policy to apply to the communicating device UCD depends on the social relationship between the user of the communicating device UCD and the user owning the network entity NE, and may further depend on the presence status of the user of the communicating device UCD.

Optionally, the policy to apply to the communicating device UCD may be more precise and may apply to each communication entity linked to the communicating device UCD.

The different policies are pre-established and may be updated by the user owning the network entity.

It is further presented different examples for illustrating purposes.

In an example, Bob owns two controlling devices controlling respectively his computer firewall and his modem firewall to allow connection from and to Alice's devices. On her side, Alice owns one controlling device controlling her computer firewall. Bob's controlling devices are able to retrieve profile information from the system SNS. Bob has also several communication entities linked to his computer, including a standalone networked camera. Depending of Bob's status and the communication entities, for example if Bob's status is away then the camera is not expected to be in use, the controlling device will command the firewall to apply a corresponding policy to the camera, for example dismiss the flows coming from camera.

In another example, Bob owns a controlling device included in a wireless access point, like a femtocell or WLAN access point, associated to his house. The controlling device is able to retrieve profile information from the system SNS, and define a group including the set of devices that are allowed to connect to the access point. For example, the devices associated to users belonging to "Family" group can have access to the access point. Optionally, this can be made more dynamic for example by opening the access to the access point to friends who have "At Bob's home" in their status.

The invention described here relates to a method and a controlling device for controlling a connection between devices. In an embodiment, the steps of the method of the invention are determined by the instructions of a computer program incorporated in a data processing device such as the controlling device CD according to the invention. The program includes program instructions which, when said program is executed in a processor of the data processing device the operation whereof is then controlled by the execution of the program, execute the steps of the method according to the invention.

As a consequence, the invention applies also to a computer program, in particular a computer program on or in an information medium readable by a data processing device, adapted to implement the invention. That program may use any programming language and be in the form of source code, object code or an intermediate code between source code and object code, such as a partially compiled form, or in any other desirable form for implementing the method according to the invention.

The information medium may be any entity or device capable of storing the program. For example, the medium may include storage means or a recording medium on which the computer program according to the invention is recorded, such as a ROM, for example a CD ROM or a microelectronic circuit ROM, or a USB key, or magnetic recording means, for example a diskette (floppy disk) or a hard disk.

## Claims

1. A method for controlling connection between at least a user communicating device (UCD) and a network entity (NE) through a telecommunication network (TN), comprising the following steps executed in a controlling device (CD) linked to the network entity (NE):
interrogating (S2, S3) a social network system (SNS) to retrieve profile data (PrD) of the user of the communicating device (UCD), and
applying (S4) a policy to control the connection between the network entity (NE) and the user communicating device (UCD), the policy depending on the profile data (PrD) including at least a social relationship between the user of the communicating device (UCD) and the user owning the network entity (NE).

2. A method according to claim 1, wherein the controlling device (CD) interrogates the social network system (SNS) after a communication attempt from the user communicating device (UCD) with the network entity (NE).

3. A method according to claim 1 or 2, comprising the following steps:
receiving an identifier (IdT) of the user communicating device (UCD) transmitted by the latter attempting a communication with the network entity (NE),
transmitting a request including an identifier (IdD) of the user communicating device (UCD) and an identifier (IdU) of the user owning the network entity (NE) to the social network system (SNS) which identifies profile data (PrD) associated with the identifier (IdD) of the user communicating device (UCD) and to the identifier (IdU) of the user and transmits a response including profile data (PrD) to the controlling device (CD).

4. A method according to any of claims 1 to 3, wherein the profile data (PrD) contains a presence status of the user of the communicating device (UCD) and the policy applied to control the connection between the network entity (NE) and the user communicating device (UCD) depends further on the presence status of the user of the communicating device (UCD).

5. A method according to any of claims 1 to 4, wherein the profile data (PrD) contains at least an identifier of a communication entity linked to the user communicating device (UCD) and the device applies a policy to control communications between the network entity (NE) and said communication entity linked to the user communicating device (UCD).

6. A method according to any of claims 1 to 5, wherein the network entity (NE) is an access control enforcement point.

7. A method according to any of claims 1 to 6, wherein the policy applied to control the connection between the network entity (NE) and the user communicating device (UCD) is a set of instructions to allow or deny an access request from the user communicating device (UCD)to the network entity (NE).

8. Controlling device (CD) for controlling connection between at least a user communicating device (UCD) and a network entity (NE) linked to the controlling device (CD) through a telecommunication network (TN), comprising:
means (INT) for interrogating a social network system (SNS) to retrieve profile data (PrD) of the user of the communicating device (UCD), and
means (POL) for applying a policy to control the connection between the network entity (NE) and the user communicating device (UCD), the policy depending on the profile data (PrD) including at least a social relationship between the user of the communicating device (UCD) and the user owning the network entity (NE).

9. A computer program adapted to be executed in a controlling device (CD) for controlling connection between at least a user communicating device (UCD) to a network entity (NE) linked to the controlling device (CD) through a telecommunication network (TN), said program including instructions which, when said program is executed in said controlling device, execute the following steps :
interrogating (S2, S3) a social network system (SNS) to retrieve profile data (PrD) of the user of the communicating device (UCD), and
applying (S4) a policy to control the connection between the network entity (NE) and the user communicating device (UCD), the policy depending on the profile data (PrD) including at least a social relationship between the user of the communicating device (UCD)and the user owning the network entity (NE).

## Patentansprüche

1. Verfahren zur Steuerung einer Verbindung zwischen mindestens einem Benutzerkommunikationsgerät (UCD) und einer Netzwerkentität (NE) über ein Telekommunikationsnetzwerk (TN), die folgenden in einer mit der Netzwerkentität (NE) verbundenen Steuervorrichtung (CD) durchgeführten Schritte umfassend:
Abfragen (S2, S3) eines sozialen Netzwerksystems (SNS), um Profildaten (PrD) des Benutzers des Kommunikationsgeräts (UCD) abzurufen, und
Anwenden (S4) einer Richtlinie, um die Verbindung zwischen der Netzwerkentität (NE) und dem Benutzerkommunikationsgerät (UCD) zu steuern, wobei die Richtlinie von den Profildaten (PrD), welche zumindest eine sociale Beziehung zwischen dem Benutzer des Kommunikationsgeräts (UCD) und dem Benutzer, welcher der Eigentümer der Netzwerkentität (NE) ist, umfassen, abhängt.

2. Verfahren nach Anspruch 1, wobei die Steuervorrichtung (CD) das soziale Netzwerksystem (SNS) nach einem Kommunikationsversuch des Benutzerkommunikationsgeräts (UCD) mit der Netzwerkentität (NE) abfragt.

3. Verfahren nach Anspruch 1 oder 2, die folgenden Schritte umfassend:
Empfangen einer Kennung (IdD) des Benutzerkommunikationsgeräts (UCD), welche von letzterem bei einem Kommunikationsversuch mit der Netzwerkentität (NE) übertragen wurde,
Übertragen einer Anforderung einschließlich einer Kennung (IdD) des Benutzerkommunikationsgeräts (UCD) und einer Kennung (IdU) des Benutzers, welcher der Eigentümer der Netzwerkentität (NE) ist, an das soziale Netzwerksystem (SNS), welches mit der Kennung (IdD) des Benutzerkommunikationsgeräts (UCD) und der Kennung (IdU) des Benutzers assoziierte Profildaten (PrD) identifiziert und eine Antwort mit den Profildaten (PrD) an die Steuervorrichtung (CD) überträgt.

4. Verfahren nach einem beliebigen der Ansprüche 1 bis 3, wobei die Profildaten (PrD) einen Präsenzstatus des Benutzers der Kommunikationsvorrichtung (UCD) enthalten und die für die Steuerung der Verbindung zwischen der Netzwerkentität (NE) und dem Benutzerkommunikationsgerät (UCD) angewandte Richtlinie weiterhin von dem Präsenzstatus des Benutzers der Kommunikationsvorrichtung (UCD) abhängt.

5. Verfahren nach einem beliebigen der Ansprüche 1 bis 4, wobei die Profildaten (PrD) zumindest eine Kennung einer mit dem Benutzerkommunikationsgerät (UCD) verbundenen Kommunikationsentität enthalten und die Vorrichtung eine Richtlinie zur Steuerung der Kommunikationen zwischen der Netzwerkentität (NE) und der besagten mit dem Benutzerkommunikationsgerät (UCD) verbundenen Kommunikationsentität anwendet.

6. Verfahren nach einem beliebigen der Ansprüche 1 bis 5, wobei die Netzwerkentität (NE) ein Durchsetzungspunkt für die Zugangssteuerung ist.

7. Verfahren nach einem beliebigen der Ansprüche 1 bis 6, wobei die für die Steuerung der Verbindung zwischen der Netzwerkentität (NE) und dem Benutzerkommunikationsgerät (UCD) angewandte Richtlinie ein Satz von Anweisungen für die Zulassung oder die Verweigerung einer Zugangsanforderung von dem Benutzerkommunikationsgerät (UCD) an die Netzwerkentität (NE) ist.

8. Steuervorrichtung (CD) zur Steuerung einer Verbindung zwischen mindestens einem Benutzerkommunikationsgerät (UCD) und einer mit der Steuervorrichtung (CD) verbundenen Netzwerkentität (NE) über ein Telekommunikationsnetzwerk (TN), umfassend:
Mittel (INT) zum Abfragen eines sozialen Netzwerksystems (SNS), um Profildaten (PrD) des Benutzers des Kommunikationsgeräts (UCD) abzurufen, und
Mittel (POL) zum Anwenden einer Richtlinie, um die Verbindung zwischen der Netzwerkentität (NE) und dem Benutzerkommunikationsgerät (UCD) zu steuern, wobei die Richtlinie von den Profildaten (PrD), welcher zumindest eine sociale Beziehung zwischen dem Benutzer des Kommunikationsgeräts (UCD) und dem Benutzer, welcher der Eigentümer der Netzwerkentität (NE) ist, umfassen, abhängt.

9. Computerprogramm, geeignet für die Ausführung in einer Steuervorrichtung (CD), um eine Verbindung zwischen mindestens einem Benutzerkommunikationsgerät (UCD) und einer Netzwerkentität (NE), welche über ein Telekommunikationsnetzwerk (TN) mit der Steuervorrichtung (CD) verbunden ist, zu steuern, wobei das besagte Programm Anweisungen umfasst, um bei dessen Ausführung in der besagten Steuervorrichtung die folgenden Schritte durchzuführen:
Abfragen (S2, S3) eines sozialen Netzwerksystems (SNS), um Profildaten (PrD) des Benutzers des Kommunikationsgeräts (UCD) abzurufen, und
Anwenden (S4) einer Richtlinie, um die Verbindung zwischen der Netzwerkentität (NE) und dem Benutzerkommunikationsgerät (UCD) zu steuern, wobei die Richtlinie von den Profildaten (PrD), welche zumindest eine soziale Beziehung zwischen dem Benutzer des Kommunikationsgeräts (UCD) und dem Benutzer, welcher der Eigentümer der Netzwerkentität (NE) ist, umfassen, abhängt.

## Revendications

1. Procédé de contrôle de connexion entre au moins un dispositif de communication utilisateur (UCD) et une entité de réseau (NE) par l'intermédiaire d'un réseau de télécommunication (TN), comprenant les étapes suivantes exécutées dans un dispositif de contrôle (CD) relié à l'entité de réseau (NE) :
interroger (S2, S3) un système de réseau social (SNS) pour récupérer des données de profil (PrD) de l'utilisateur du dispositif de communication (UCD), et
appliquer (S4) une politique pour contrôler la connexion entre l'entité de réseau (NE) et le dispositif de communication utilisateur (UCD), la politique dépendant des données de profil (PrD) comprenant au moins une relation sociale entre l'utilisateur du dispositif de communication (UCD) et l'utilisateur qui possède l'entité de réseau (NE).

2. Procédé selon la revendication 1, dans lequel le dispositif de contrôle (CD) interroge le système de réseau social (SNS) après une tentative de communication à partir du dispositif de communication utilisateur (UCD) avec l'entité de réseau (NE).

3. Procédé selon la revendication 1 ou 2, comprenant les étapes suivantes :
recevoir un identifiant (ldT) du dispositif de communication utilisateur (UCD) transmis par ce dernier qui tente une communication avec l'entité de réseau (NE),
transmettre une demande comprenant un identifiant (IdD) du dispositif de communication utilisateur (UCD) et un identifiant (IdU) de l'utilisateur qui possède l'entité de réseau (NE) au système de réseau social (SNS) qui identifie des données de profil (PrD) associées à l'identifiant (IdD) du dispositif de communication utilisateur (UCD) et à l'identifiant (IdU) de l'utilisateur et transmet une réponse comprenant des données de profil (PrD) au dispositif de contrôle (CD).

4. Procédé selon l'une quelconque des revendications 1 à 3, dans lequel les données de profil (PrD) contiennent un état de présence de l'utilisateur du dispositif de communication (UCD) et la politique appliquée pour contrôler la connexion entre l'entité de réseau (NE) et le dispositif de communication utilisateur (UCD) dépend en outre de l'état de présence de l'utilisateur du dispositif de communication (UCD).

5. Procédé selon l'une quelconque des revendications 1 à 4, dans lequel les données de profil (PrD) contiennent au moins un identifiant d'une entité de communication reliée au dispositif de communication utilisateur (UCD) et le dispositif applique une politique pour contrôler des communications entre l'entité de réseau (NE) et ladite entité de communication reliée au dispositif de communication utilisateur (UCD).

6. Procédé selon l'une quelconque des revendications 1 à 5, dans lequel l'entité de réseau (NE) est un point d'application du contrôle d'accès.

7. Procédé selon l'une quelconque des revendications 1 à 6, dans lequel la politique appliquée pour contrôler la connexion entre l'entité de réseau (NE) et le dispositif de communication utilisateur (UCD) est un ensemble d'instructions pour accorder ou refuser une demande d'accès entre le dispositif de communication utilisateur (UCD) et l'entité de réseau (NE).

8. Dispositif de contrôle (CD) pour contrôler une connexion entre au moins un dispositif de communication utilisateur (UCD) et une entité de réseau (NE) reliée au dispositif de contrôle (CD) par l'intermédiaire d'un réseau de télécommunication (TN), comprenant :
des moyens (INT) pour interroger un système de réseau social (SNS) pour récupérer des données de profil (PrD) de l'utilisateur du dispositif de communication (UCD), et
des moyens (POL) pour appliquer une politique pour contrôler la connexion entre l'entité de réseau (NE) et le dispositif de communication utilisateur (UCD), la politique dépendant des données de profil (PrD) comprenant au moins une relation sociale entre l'utilisateur du dispositif de communication (UCD) et l'utilisateur qui possède l'entité de réseau (NE).

9. Programme informatique adapté pour être exécuté dans un dispositif de contrôle (CD) pour contrôler une connexion entre au moins un dispositif de communication utilisateur (UCD) et une entité de réseau (NE) reliée au dispositif de contrôle (CD) par l'intermédiaire d'un réseau de télécommunication (TN), ledit programme comprenant des instructions qui, lorsque ledit programme est exécuté dans ledit dispositif de contrôle, exécutent les étapes suivantes :
interroger (S2, S3) un système de réseau social (SNS) pour récupérer des données de profil (PrD) de l'utilisateur du dispositif de communication (UCD), et
appliquer (S4) une politique pour contrôler la connexion entre l'entité de réseau (NE) et le dispositif de communication utilisateur (UCD), la politique dépendant des données de profil (PrD) comprenant au moins une relation sociale entre l'utilisateur du dispositif de communication (UCD) et l'utilisateur qui possède l'entité de réseau (NE).
